# EUROPÄISCHE PATENTSCHRIFT

(11) **EP 4 146 609 B1**
(45) Veröffentlichungstag und Bekanntmachung des Hinweises auf die Patenterteilung: **25.02.2026**
(21) Anmeldenummer: 21723667.8
(22) Anmeldetag: 28.04.2021
(51) Int. Cl.: C04B 14/10, C04B 28/02

(54) **VERFAHREN ZUR BEREITSTELLUNG EINES REAKTIVEN ZEMENTBESTANDTEILS ODER BETONZUSATZSTOFFS**
METHOD FOR PROVIDING A REACTIVE CEMENT COMPONENT OR CONCRETE ADDITIVE
PROCÉDÉ POUR LA PRÉPARATION D'UN COMPOSANT DE CIMENT RÉACTIF OU ADDITIF POUR BÉTON RÉACTIF

(30) Priorität: 06.05.2020 DE 102020112207
(43) Veröffentlichungstag der Anmeldung: 15.03.2023
(73) Patentinhaber: Rheinisch-Westfälische Technische Hochschule (RWTH) Aachen, 52062 Aachen (DE)
(72) Erfinder: WEITKÄMPER, Lars, 52072 Aachen (DE); RAUSCH, Martin, 52076 Aachen (DE); GOßMANN, Dirk, 52064 Aachen (DE); VOLLPRACHT, Anya, 52080 Aachen (DE); WOTRUBA, Hermann, 52074 Aachen (DE); JUNGMANN, Andreas, 45239 Essen (DE)
(74) Vertreter: karo IP
(86) Internationale Anmeldenummer: PCT/EP2021/061193
(87) Internationale Veröffentlichungsnummer: WO 2021/224094

(56) Entgegenhaltungen:
- US-B1- 7 481 878

## Beschreibung

Die vorliegende Erfindung betrifft ein Verfahren zur Herstellung von Zement bzw. Beton.

Die globale Entwicklung hinsichtlich Bevölkerungswachstum, zunehmende Urbanisierung und wirtschaftlicher Fortschritt erhöhen die Nachfrage nach neuen Gebäuden und Infrastrukturen und damit nach Beton. Bereits heute ist Beton nach Wasser massen bezogen der zweithäufigste durch den Menschen angewandte Stoff. Obwohl Beton niedrige spezifische CO₂-Emissionen von unter 150 kgCO_{2,eq}/t Beton aufweist, ist er aufgrund seiner eingesetzten Menge für 5-8 % der vom Menschen verursachten CO₂-Emissionen verantwortlich.

Der größte Teil der Emissionen des Betons stammt aus der Produktion des Zementklinkers, der Hauptkomponente des Zements. Zur Herstellung von Zementklinker wird ein Gemisch aus kalkhaltigem Gestein und aus Ton vermahlen und anschließend gebrannt, dabei spaltet der im Rohmehl enthaltene Kalk Kohlendioxid (CO₂) ab und wird in gebrannten Kalk (CaO) überführt. Im weiteren Verlauf des Brennprozesses wird das durch die CO₂-Abspaltung entsäuerte Rohmehl zu verschiedenen Calciumsilikatphasen sowie Calciumaluminat und -aluminatferrit gesintert. Eine entsprechend komplexe und energieintensive Anlage zur Herstellung von Zementklinker sowie ein dazu korrespondierendes Verfahren geht beispielsweise aus der DE 10 2013 006 236 hervor.

Zement wird heute in modernen Zementwerken im Rahmen eines kontinuierlichen Prozesses aus überwiegend natürlichen Rohstoffen im Trockenverfahren hergestellt. Die Rohstoffe (Kalkstein, Ton, ggf. Sand und Eisenerz) werden üblicherweise in Steinbrüchen abgebaut, in Brechern vorzerkleinert und in das Zementwerk befördert. In Rohr- sowie alternativ anderen Feinmühlen werden die Rohmaterialien zusammen vermahlen und gleichzeitig getrocknet, wobei so genanntes Rohmehl entsteht, das dann in einem Drehrohrofen bei Temperaturen von ca. 1450 °C zu dem Klinker gebrannt wird, welcher dann in einem Kühler auf eine Temperatur von unter 200 °C heruntergekühlt wird. Die entstehenden graubraunen Granalien werden anschließend in Kugel- sowie alternativ anderen Feinmühlen zusammen mit Gips oder Anhydrit zum fertigen Produkt, dem Zement, vermahlen. Durch die Zugabe unterschiedlicher Zusatzstoffe wie Hüttensand, Puzzolan, Flugasche und Kalkstein können Zemente mit verschiedenen chemischen und physikalischen Eigenschaften hergestellt werden.

Zement ist ein so genanntes hydraulisches Bindemittel. Als hydraulisch werden Stoffe bezeichnet, die sowohl an Luft als auch unter Wasser erhärten und beständig sind. Zement reagiert mit Wasser unter Bildung unlöslicher, stabiler Verbindungen. Diese Verbindungen, die Calciumsilikathydrate, bilden feine nadelförmige Kristalle aus, welche sich untereinander verzahnen und so zur hohen Festigkeit eines Zementsteins führen. Diese Eigenschaften machen Zement zu einem Bindemittel, das den hohen Anforderungen im Baubereich entspricht.

Die Zementindustrie muss ihre damit einhergehenden Emissionen drastisch reduzieren und gleichzeitig den steigenden Zementbedarf der Weltwirtschaft decken.

US 7 481 878 B1 offenbart die Bereitstellung von aktiviertem Ton, der aus einem ölhaltigen Abfallmaterial gewonnen wird.

Daher ist es Aufgabe der vorliegenden Erfindung, die mit Bezug auf den Stand der Technik genannten Probleme wenigstens teilweise zu lösen. Insbesondere soll ein Verfahren zur umwelt- und/oder ressourcenschonenderen Gewinnung eines weiteren Hauptbestandteils für Zement vorgeschlagen werden. Zudem soll ein Material als Betonzusatzstoff bei der Betonherstellung vorgeschlagen werden, mit dem der Zementgehalt des Betons verringert werden kann. Insbesondere soll ein Verfahren zur Gewinnung und Bereitstellung von bindemittelfähigen Bestandteilen zur Herstellung von Zement bzw. Beton angegeben werden.

Diese Aufgaben werden gelöst mit einem Verfahren beziehungsweise einer Verwendung nach einem der unabhängigen Patentansprüche. Vorteilhafte Weiterbildungen sind in den abhängigen Patentansprüchen angegeben. Es ist darauf hinzuweisen, dass die in den Patentansprüchen aufgeführten Merkmale in beliebiger, technologisch sinnvoller Weise miteinander kombinierbar sind und weitere Ausführungsbeispiele angeben. Die Beschreibung, insbesondere im Zusammenhang mit den Figuren erläutert die Erfindung und benennt weitere vorteilhafte Ausgestaltungen der Erfindung.

Hierzu trägt ein Verfahren zur Bereitstellung eines reaktiven Zementbestandteils oder Betonzusatzstoffs bei, welches zumindest die folgenden Schritte umfasst:
a) Rückbauen einer kohlenstoffhaltigen Halde, welche zumindest Kohle und tonhaltiges Gestein enthält;
b) Entnehmen zumindest von kalziniertem Gestein;
c) Erzeugung von feinkörnigem kalzinierten Gestein;
d) Bereitstellen von feinkörnigem kalzinierten Gestein für die Anwendung als Zementbestandteil oder Betonzusatzstoff.

Das tonhaltige Gestein umfasst kalziniertes Gestein. Das kalzinierte Gestein umfasst dabei autogen kalzinierten Ton, der durch einen Ausbrand der Kohle entstanden ist.

Die vorstehend genannten Schritte können in der angegebenen Reihenfolge durchgeführt werden, das ist aber nicht zwingend erforderlich. Insbesondere ist möglich, dass die Schritte einander zeitlich wenigstens teilweise überlagern, an verschiedenen Orten zeitlich versetzt ausgeführt und/oder unterschiedlich oft wiederholt werden.

Gemäß Schritt a) wird eine kohlenstoffhaltige Halde rückgebaut. Die Halde umfasst dabei zumindest Kohle und tonhaltiges Gestein, wobei das Gestein zumindest autogen kalzinierten Ton aufweist. Insbesondere handelt es sich bei der Kohle um Steinkohle. Als Gestein wird hier insbesondere ein (festes) natürliche Material verstanden, das überwiegend oder sogar zumindest im Wesentlichen aus mineralischen Komponenten besteht. Das Gestein umfasst zu einem wesentlichen Anteil Ton. Ganz besonders bevorzugt handelt es sich bei der Halde um eine Ansammlung von Fördergut aus einem Steinkohlebergwerk. "Rückbauen" umfasst in diesem Zusammenhang insbesondere das zumindest teilweise Abtragen, Umsortieren, Umschichtung, Umsetzen und/oder Verlagern von Kohle, Gestein und/oder Fremdstoffen der Halde, insbesondere nachdem die Halde über einen langen Zeitraum (ohne Rückbau) bestand hatte. Kohle und/oder Gestein liegen bei der Halde gegebenenfalls mit einer Körnung von bis zu 100 mm [Millimetern] vor.

Insbesondere findet das Verfahren Anwendung bei Halden, die Steinkohle, kalzinierten und nicht-kalzinierten Ton umfassen. Der gemittelte Anteil der Steinkohle kann bis zu 15% betragen. Es handelt sich bei dem kalzinierten Ton um "autogen" kalzinierten Ton, der durch einen Ausbrand der Kohle entstanden ist. Dies erfolgt meist bzw. insbesondere durch Selbstentzündung der Kohle in der Halde unter entsprechenden Umgebungsbedingungen. Aufgrund der über die Zeit ggf. vielfachen und lokalen Selbstentzündung können sich über einen längeren Zeitpunkt in Abschnitten der Halde Trockenheit und Temperaturen im Bereich von 350-800°C einstellen, die ein Kalzinieren von Gestein, insbesondere Ton, zur Folge haben.

Es kann aufgrund der teils groben Körnung sinnvoll sein, wenigstens einen Teil der Bestandteile der Halde vorzubrechen, beispielsweise auf eine Körnung im Bereich von etwa 30 bis 40 mm. Ein solcher Prozess kann noch vor und/oder während Schritt b) ausgeführt werden.

Gemäß Schritt b) wird zumindest ein Teil des in der Halde befindlichen kalzinierten Gesteins entnommen. Es ist möglich, dass tatsächlich nur selektiv die kalzinierten Gesteine aus der Halde entnommen werden. Es ist jedoch zumeist üblich, einen Abschnitt mit allen Bestandteilen der Halde abzutragen und nachfolgend daraus die kalzinierten Gesteine zu identifizieren und zu separieren. Insbesondere sind Maßnahmen und/oder Apparate vorgesehen bzw. eingesetzt, die aus den Bestandteilend der Halde eben die kalzinierten Gesteine (eigenständig und/oder automatisch) erkennen und entnehmen.

Für die nachfolgende Beimischung des kalzinierten Gesteins zu Zement wird gemäß Schritt c) die Feinheit des kalzinierten Gesteins eingestellt. Insbesondere werden (mit oder ohne Mahlvorschritte) die feinteiligen Anteile des kalzinierten Gesteins, insbesondere Tons, erzeugt und/oder abgeschieden. Es ist möglich, dass dies bereits in der Konditionierung bzw. unmittelbar nach der Entnahme aus der Halde stattfindet, es kann aber auch alternativ oder kumulativ sein, dass die aus der Halde entnommenen Anteile des kalzinierten Gesteins zunächst aufbereitet (z. B. getrocknet und/oder gemahlen) werden, bevor Schritt c) ausgeführt wird. Feinkörnig bedeutet in diesem Zusammenhang insbesondere, dass eine Körnung des kalzinierten Gesteins kleiner 5 mm [Millimeter] beträgt, insbesondere kleiner 2 mm oder sogar kleiner 1 mm. Es ist möglich, dass das kalzinierte Gestein mit einer Körnung kleiner 200 µm [Mikrometer] oder sogar kleiner 125 µm als Bindemittelbestanteil im Zement bereitgestellt wird.

Entsprechend Schritt d) wird feinkörniges kalziniertes Gestein für die Anwendung als Zementbestandteil oder Betonzusatzstoff bereitgestellt. Das kann bedeuten, dass dieses kalzinierte Gestein direkt einem Herstellungsverfahren für Zement zugeleitet wird. In vielen Fällen wird die Zementproduktion aber an einem anderen Ort durchgeführt, so dass das gewonnene kalzinierte Gestein dorthin befördert und zu einem späteren Zeitpunkt verarbeitet wird.

Bei der Kalzination von Ton verliert dieser insbesondere Oberflächen und Strukturwasser. Eine Folge dieses Wasserverlusts ist ggf. die Bildung röntgenamorpher Meta-Tonminerale. Bei weiterer Aufheizung (500-1250°C) bilden sich durch Aufschmelzen der Meta-Tonminerale entweder Alumino-Silikatgläser oder ggf. auch Mullit oder Cristobalit, wobei hohe Gehalte von Mullit und Cristobalit im vorliegenden Fall unerwünscht sind. Diese Eigenschaften können bei der (selektiven) Entnahme von kalziniertem Ton aus der Brennstoff-Halde herangezogen werden.

Schritt b) kann wenigstens einen der folgenden Prozesse umfassen:
- Gravimetrische Sortierung
- Sensorische Sortierung

Die vorstehend genannten Prozesse können insbesondere dazu genutzt werden, die Bestandteile der Halde zu trennen oder zu selektieren. Es kann hierfür sinnvoll sein, die Bestandteile mit einer für den Prozess geeigneten Körnung bereitzustellen, also insbesondere vorher zu brechen, so dass die Körnung maximal 50 mm beträgt.

Die gravimetrische Sortierung bzw. Dichte-Sortierung umfasst insbesondere die Bestimmung der Masse von Bestandteilen der Halde, beispielsweise mittels einer so genannten Auswaage. Insbesondere kann dies eine sensorische Ermittlung des spezifischen Gewichtes von Schwer- und Leichtgut und eine Trennung dieser Bestandteile unter Zuhilfenahme des Signals der Sensorik umfassen.

Die sensorische Sortierung erfolgt bevorzugt unter Einsatz eines Bild- und/oder Filmeerzeugenden Sensors, insbesondere einer Kamera. Es ist möglich, dass es sich um einen optischen Sensor handelt. Auch ein im Nah-Infratorbereich arbeitender Sensor kann eingesetzt werden.

Schritt b) und/oder Schritt c) kann wenigstens einen der folgenden Prozesse umfassen:
- Elektrostatische Abscheidung
- Magnetische Abscheidung

Die vorstehend genannten Prozesse können insbesondere dazu genutzt werden, die Bestandteile der Halde bzw. das entnommene kalzinierten Gestein abzutrennen oder zu selektieren. Es kann hierfür sinnvoll sein, die Bestandteile mit einer für den Prozess geeigneten Körnung bereitzustellen, also insbesondere vorher zu brechen und/oder zu mahlen, dass die Körnung maximal 5 mm beträgt.

Bei der elektrostatischen Abscheidung wird eine Körnung der Bestandteile von maximal 2 mm bevorzugt. Hierfür kann ein Abscheider zum Einsatz kommen, der eine Hochspannungsanlage, Sprüh- und Niederschlagselektroden und ein Abreinigungssystem aufweist. Ein partikel beladener bzw. die Bestandteile/Fremdstoffe umfassender Luftstrom kann dort mittels Sprühelektroden, an denen eine hohe negative Spannung anliegt, ionisiert werden. Die Partikel werden negativ aufgeladen und lagern sich an positiv geladenen Niederschlagselektroden an. Die so abgetrennten Partikel können mit dem Abreinigungssystem aus dem Abscheider entfernt werden.

Bei Einsatz einer magnetischen Abscheidung sollte der Eisengehalt des abzuscheidenden Gesteins größer 1,5 Gew.% und die Körnung maximal 5 mm betragen. Im einfachsten Fall wird das Material auf einem Förderband unter einem Magnet entlanggeführt. Die magnetischen Gesteine, insbesondere der kalzinierte Ton mit dem angegebenen Eisengehalt, werden dann vom Magneten angezogen und so von nicht magnetischen Materialen getrennt.

Nach Schritt b) kann zumindest ein Teil des Gesteins konditioniert werden, wobei dieser wenigstens teilweise zerkleinert oder getrocknet wird.

"Konditioniert" bedeutet in diesem Zusammenhang insbesondere, dass das (kalzinierte) Gestein hinsichtlich seiner Eigenschaften so eingestellt wird, dass zumindest der nachfolgende Prozess oder Verfahrensschritt möglichst effizient ausgeführt werden kann. Dies kann das Einstellen einer vorgegebenen Körnung, beispielsweise mittels Brechen, Mahlen, etc., und/oder das Einstellen einer Temperatur und/oder das Einstellen einer Dichte bzw. Verteilung in einem Volumen bzw. über eine Fläche und/oder das Einstellen einer Feuchte umfassen. Hierfür kann eine Temperaturbehandlung bis hin zu ca. 120 °C mit umfasst sein.

Der feinkörnige bzw. staubförmige Anteil des kalzinierten Gesteins kann insbesondere mit weiteren Fraktionen einer Zementzusammensetzung gemischt werden. Für den Fall des kalzinierten Tons kann insbesondere die Fraktion des Klinkers und/oder der Flugasche herkömmlicher Zementzusammensetzung zumindest teilweise ersetzt werden. Alternativ ist die Anwendung als Betonzusatzstoff möglich. Insbesondere sind die Eigenschaften des kalzinierten Gesteins für diese Ersatzstoffzwecke mit dem hier vorgeschlagenen Verfahren eingestellt worden.

Es wird hier davon ausgegangen, dass die Verwendung von kalziniertem Ton als reaktiver Zusatzstoff für die Zement- und/oder Betonproduktion zunehmend an Bedeutung gewinnt. Hintergrund ist, dass die Kalzinierung des Tons bei erheblich geringeren Temperaturen stattfindet als die Verklinkerung von Kalkstein. In diesem speziellen Fall hat die Kalzinierung bereits stattgefunden, so dass die CO₂-Bilanz deutlich günstiger als bei künstlich kalzinierten Tonen ausfällt.

Mit dem fortschreitenden Rückbau sowie anhaltenden Verzicht auf neue Kohlekraftwerke und der sinkenden Nachfrage nach Roheisen wird die Verfügbarkeit von geeigneten Flugaschen und Hochofenschlacken sinken.

Seit Kohle in ein aschearmes (Brennstoff) und ein aschereiches Produkt (Waschberge) getrennt wird, fällt eine aschereiche Fraktion an, die in der Regel im Altbergbau verfüllt oder auf Halden deponiert wird. Eine Vielzahl von Waschbergehalden sind aufgrund der Restkohleanteile im Inneren selbst entzündet und brennen bzw. haben unkontrolliert gebrannt. Der thermische Prozess innerhalb der Halden verklinkert bzw. kalziniert die beinhalteten Bergeanteile, sodass erhebliche Mengen einer solchen Halde aus gebrannten Tonen bestehen. Diese kalzinierten Tone sind mineralogisch und chemisch den Zusatzstoffen zum Portlandzementklinker sehr ähnlich. Darüber hinaus sind diese kalzinierten Gesteine im Vergleich zum Kalkstein und dem daraus hergestellten Portlandzementklinker CO₂-neutraler, weil die thermische Behandlung praktisch abgeschlossen ist.

Im Rahmen von Sanierungsmaßnahmen werden vermehrt Waschberge-Halden gesichert, umgelagert und renaturiert. Durch das hier beschriebene Verfahren kann ein großer Anteil des Materials [>50%] umweltgerecht, nachhaltig und wirtschaftlich sinnvoll verwertet werden. Aus zu deponierendem Material entsteht ein Rohstoff der vermarktbar ist. Dies reduziert den neu zu deponierenden Anteil, senkt den Flächenbedarf, die Transportkosten und auch die beim Transport anfallenden CO₂-Emmissionen.

Darüber hinaus ist es auch möglich, mit dem beschriebenen Verfahren neben den kalzinierten Gesteinen auch unverbrannte Restkohle auszusortieren und als fossilen Brennstoff einzusetzen.

Ebenso können die weiteren nicht-kalzinierten Bestandteile bzw. Gesteine mit dem beschriebenen Verfahren aussortiert und einer Weiterverarbeitung zugeführt werden. So ist es beispielsweise möglich, diese Gesteine als Wegebaumaterial oder RC-Baustoff einzusetzen.

Die mit dem vorgeschlagenen Verfahren gewonnenen gebrannten Tone aus Steinkohlen-Lagerstätten bzw. aus Waschbergehalden können also einen erheblichen Beitrag für die Gewinnung von Zementersatzstoffen SCMs (engl.: *supplementary cementitious materials*) leisten, denn diese Tone sind bereits verklinkert und eine Temperatur-Behandlung entfällt komplett.

Es konnte der Nachweis geführt werden, dass selektiv mit dem Verfahren aufbereitete "autogen" kalzinierte Waschberge nach der Feinzerkleinerung auf Zementfeinheit (>5000 Blaine) qualitativ den industriell kalzinierten Tonen oder auch den zurzeit eingesetzten Steinkohlenflugaschen entsprechen bzw. diese sogar übertreffen. Der so gewonnene Komposit-Zement hat demnach ein hervorragendes Potential, in der Bindemittelindustrie umfassend eingesetzt zu werden.

Die hier vorgeschlagene Lösung reduziert die CO₂-Emission bei der Zementproduktion erheblich und senkt den notwendigen Energieeintrag. Weiterhin fehlen in vielen Schwellenländern mit erhöhtem Zementbedarf hochwertige Rohstoffe für die Herstellung von Bindemitteln. Der mit diesem Verfahren gewonnene Zementersatzstoff kann hier einen wertvollen Beitrag zur Rohstoffversorgung leisten. Aus China und Indien ist bekannt, dass dort eine Vielzahl von Waschbergehalden brennen, bzw. sogar Steinkohle-Lagerstätten sich selbst entzündet haben. Hier liegen großen Potentiale zur Anwendung des Verfahrens vor.

Gemäß einem weiteren Aspekt wird eine Verwendung von kalziniertem Ton gewonnen aus einer kohlenstoffhaltigen Halde zur Einstellung einer hydraulischen Eigenschaft einer Zementzusammensetzung oder Betonzusammensetzung vorgeschlagen. Es handelt sich bei dem kalzinierten Ton um "autogen" kalzinierten Ton, der durch einen Ausbrand der Kohle entstanden ist.

Bevorzugt ist die Verwendung derart, dass der kalzinierte Ton als Ersatz von Zementklinker und/oder Flugasche und/oder sonstige künstliche Puzzolane oder natürliche puzzolanische Zusatzstoffe eingesetzt wird.

Weiter wird auch eine Verwendung von kalziniertem Ton gewonnen aus einer kohlenstoffhaltigen Halde für eine emissionsreduzierte oder energiereduzierte Herstellung einer Zementzusammensetzung oder Betonzusammensetzung vorgeschlagen. Es handelt sich bei dem kalzinierten Ton um "autogen" kalzinierten Ton, der durch einen Ausbrand der Kohle entstanden ist.

Es ist möglich, den kalzinierten Ton mit einer Fraktion von bis zu 25% oder sogar bis zu 40% der Zementzusammensetzung einzusetzen, ohne dass signifikante Nachteile hinsichtlich der Festigkeit des Betons hingenommen werden müssen - verglichen zu einer Zementzusammensetzung aus reinem Klinker.

Daher kann der energiereiche "autogen" kalzinierte Ton umfassend den teuren und energieintensiv produzierten Klinker herkömmlicher Zementzusammensetzungen ersetzen.

Die Erfindung sowie das technische Umfeld werden nachfolgend anhand von Figuren erläutert, die besonders bevorzugte Ausführungsbeispiele offenbaren, auf die die Erfindung jedoch nicht beschränkt ist. Es zeigen schematisch
- Fig.1:: einen Überblick über eine Haldensanierung mit integriertem Verfahren zur Bereitstellung eines reaktiven Zementbestandteils oder Betonzusatzstoffs, und
- Fig. 2:: einen Überblick über eine Behandlung von Haldenanteilen zur Bereitstellung eines reaktiven Zementbestandteils oder Betonzusatzstoffs.

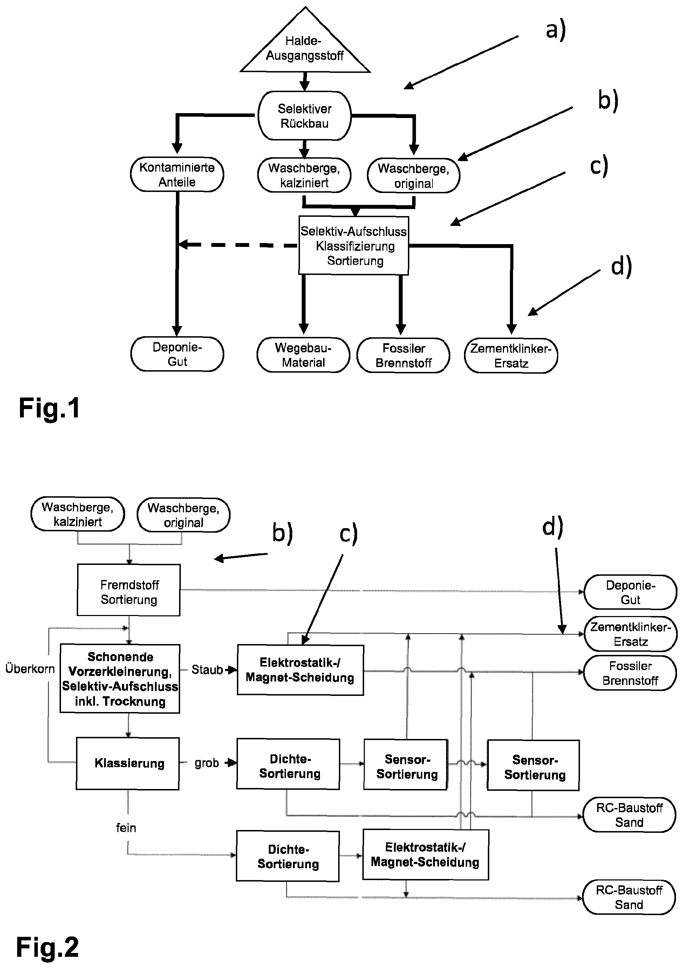

Fig. 1 zeigt oben zunächst eine Halde, die Ausgangspunkt für das Verfahren ist. Darunter ist ein möglicher Verlauf des Verfahrens dargestellt. Ausgehend von der Halde, welche Kohle, Gestein und möglicherweise Fremdstoffe enthält, erfolgt zunächst gemäß Schritt a) ein Rückbau. Als Ergebnis können drei Anteile definiert werden: Kontaminierte Anteile, die einer Deponie zuzuführen sind, und (kalzinierte und nicht-kalzinierte) Waschberge, die dem weiteren Verfahren unterzogen werden können, insbesondere werden die kalzinierten Bestandteile bzw. Gesteine ( entnommen (Schritt b)). Diese Waschberge werden dann weiter gemäß Schritt c) klassifiziert, sortiert und entnommen bzw. weiter diversifiziert. Als Ergebnis davon wird dann ein Teil des kalzinierten Gesteins als Bindemittelkomponente ausgelagert (Schritt d)). Zudem können nicht für den Einsatz in Zement / Beton taugliche Bestandteile als Wegebau-Material eingesetzt und selektierte Kohle als fossiler Brennstoff eingesetzt werden.

Fig. 2 kann eine differenzierte Vorgehensweise der Schritte b) und c) aus Fig. 1 darstellen. Demnach kann bezüglich der Waschberge eine (erneute) Fremdstoff-Sortierung erfolgen, wobei Deponie-Gut ausgelagert wird. Der restliche Anteil kann dann (ggf. mehrmals) schonend zerkleinert, temperaturbehandelt und/oder getrocknet sowie ggf. danach (immer wieder) klassifiziert werden, um die Eignung der aktuellen Eigenschaften der Bestandteile bzw. Gesteine für nachgelagerte Prozesse zu erkennen / freizugeben und ggf. weiter einzustellen. Feinkörnige bzw. staubförmige Anteile können beispielsweise mittels Elektrostatik- und/oder Magnetabscheidung erkannt, sortiert und dem vorgesehenen Verwendungszweck zugeordnet werden. Weitere feinteilige Anteile können beispielsweise (zusätzlich) mittels Dichte-Sortierung erkannt, sortiert und dem vorgesehenen Verwendungszweck zugeordnet werden. Grobkörnigere Anteile können ebenfalls mit einer Dichte-Sortierung bewertet werden, ggf. unter Einsatz einer sensorischen Sortierung, bevor auch diese erkannt, sortiert und dem vorgesehenen Verwendungszweck zugeordnet werden.

## Patentansprüche

1. Verfahren zur Bereitstellung eines reaktiven Zementbestandteils oder Betonzusatzstoffs, umfassend zumindest die folgenden Schritte:
a) Rückbauen einer kohlenstoffhaltigen Halde, welche zumindest Kohle und tonhaltiges Gestein enthält, wobei das tonhaltige Gestein kalziniertes Gestein mit autogen kalziniertem Ton aufweist, welcher durch Ausbrand der Kohle entstanden ist;
b) Entnehmen zumindest von kalziniertem Gestein;
c) Erzeugung von feinkörnigem kalziniertem Gestein;
d) Bereitstellen von feinkörnigem kalziniertem Gestein für die Anwendung als Zementbestandteil oder Betonzusatzstoff.

2. Verfahren nach Anspruch 1, bei dem Schritt b) wenigstens einen der folgenden Prozesse umfasst:
- Gravimetrische Sortierung
- Sensorische Sortierung

3. Verfahren nach einem der vorhergehenden Ansprüche, bei dem zumindest Schritt b) oder Schritt c) wenigstens einen der folgenden Prozesse umfasst:
- Elektrostatische Abscheidung
- Magnetische Abscheidung

4. Verfahren nach einem der vorhergehenden Ansprüche, bei dem nach Schritt b) zumindest ein Teil des Gesteins konditioniert wird, wobei dieses wenigstens teilweise zerkleinert oder getrocknet wird.

5. Verfahren nach einem der vorhergehenden Ansprüche, bei dem der abgeschiedene Anteil des kalzinierten Gesteins in Schritt d) mit weiteren Fraktionen einer Zementzusammensetzung gemischt wird.

6. Verwendung von autogen kalziniertem Ton, welcher durch Ausbrand der Kohle einer kohlenstoffhaltigen Halde entstanden ist und aus der kohlenstoffhaltigen Halde gewonnen wurde, für die Einstellung einer hydraulischen Eigenschaft einer Zementzusammensetzung oder Betonzusammensetzung.

7. Verwendung nach Anspruch 6, wobei der kalzinierte Ton als Ersatz von Zementklinker, Flugasche oder sonstige künstliche Puzzolane oder natürliche puzzolanische Zusatzstoffe eingesetzt wird.

8. Verwendung von autogen kalziniertem Ton, welcher durch Ausbrand der Kohle einer kohlenstoffhaltigen Halde entstanden ist und aus der kohlenstoffhaltigen Halde gewonnen wurde, für eine emissionsreduzierte Herstellung einer Zementzusammensetzung oder Betonzusammensetzung.

## Claims

1. Method for providing a reactive cement component or concrete additive, comprising at least the following steps:
a) taking down a carbonaceous heap containing at least coal and clayey rock, wherein the clayey rock includes calcined rock with autogenously calcined clay produced by burning out the coal;
b) removing at least calcined rock;
c) producing fine-grained calcined rock;
d) providing fine-grained calcined rock for use as a cement component or concrete additive.

2. Method according to claim 1, wherein step b) comprises at least one of the following processes:
- gravimetric sorting
- sensory sorting

3. Method according to one of the preceding claims, wherein at least step b) or step c) comprises at least one of the following processes:
- electrostatic separation
- magnetic separation

4. Method according to one of the preceding claims, wherein after step b) at least part of the rock is conditioned, whereby it is at least partially crushed or dried.

5. Method according to one of the preceding claims, wherein the separated portion of the calcined rock in step d) is mixed with further fractions of a cement composition.

6. Use of autogenously calcined clay, which has been produced by burning out the carbon from a carbon-containing heap and has been extracted from the carbon-containing heap, for adjusting a hydraulic property of a cement composition or concrete composition.

7. Use according to claim 6, wherein the calcined clay is used as a substitute for cement clinker, fly ash or other artificial pozzolans or natural pozzolanic additives.

8. Use of autogenously calcined clay, which has been produced by burning coal from a carbon-containing heap and extracted from the carbon-containing heap, for the emission-reduced production of a cement composition or concrete composition.

## Revendications

1. Procédé de fourniture d'un composant de ciment ou additif de béton réactif, comprenant au moins les étapes suivantes :
a) la déconstruction d'un terril carboné contenant au moins du charbon et une roche argileuse, la roche argileuse présentant une roche calcinée avec de l'argile calcinée de manière autogène, obtenue par combustion du charbon ;
b) l'extraction d'au moins la roche calcinée ;
c) la production d'une roche calcinée à grains fins ;
d) la fourniture de la roche calcinée à grains fins pour une utilisation en tant que composant de ciment ou additif de béton.

2. Procédé selon la revendication 1, dans lequel l'étape b) comprend au moins l'un des processus suivants :
- un tri gravimétrique
- un tri sensoriel.

3. Procédé selon l'une quelconque des revendications précédentes, dans lequel au moins l'étape b) ou l'étape c) comprend au moins l'un des processus suivants :
- un dépôt électrostatique
- un dépôt magnétique.

4. Procédé selon l'une quelconque des revendications précédentes, dans lequel, après l'étape b), au moins une partie de la roche est conditionnée, celle-ci étant au moins partiellement broyée ou séchée.

5. Procédé selon l'une quelconque des revendications précédentes, dans lequel la partie séparée de la roche calcinée est mélangée à l'étape d) avec d'autres fractions d'une composition de ciment.

6. Utilisation d'argile calcinée de manière autogène, obtenue par calcination du charbon d'un terril carboné et récupérée à partir du terril carboné, pour l'ajustement d'une propriété hydraulique d'une composition de ciment ou d'une composition de béton.

7. Utilisation selon la revendication 6, dans laquelle l'argile calcinée est utilisée en remplacement de clinker de ciment, de cendres volantes ou d'autres pouzzolanes artificielles ou d'additifs pouzzolaniques naturels.

8. Utilisation d'argile calcinée de manière autogène, obtenue par combustion du charbon d'un terril carboné et récupérée à partir du terril carboné, pour la production à émissions réduites d'une composition de ciment ou d'une composition de béton.
